# EUROPEAN PATENT APPLICATION

(11) **EP 1 321 428 A1**
(43) Date of publication of application: **25.06.2003**
(21) Application number: 02028288.5
(22) Date of filing: 17.12.2002
(51) Int. Cl.: B67D 3/00

(54) **Hot beverages and drinking water dispenser**

(30) Priority: 20.12.2001 IT MI20012714
(71) Applicant: Pardo, Giorgio, 20141 Milano (IT)
(72) Inventor: Pardo, Giorgio, 20141 Milano (IT)
(74) Representative: Monti, Umberto

(57) **Abstract**

An apparatus for dispensing espresso coffee, comprising a coffee brewing machine (14) directly operable by the user, characterised in that it comprises a "bowl" water container (16) for feeding water with predetermined properties to said espresso brewing machine.

## Description

The present invention concerns a combined beverages dispenser, and more particularly a dispenser adapted to deliver hot and warm beverages, typically espresso (Italian style) coffee, and drinking water both cooled and at room temperature.

There are known automatic dispensers of hot drink and beverages, such as espresso coffee, tea, etc. that use one or more pre-made filters, containing ground coffee, freeze-dried tea and the like, through which hot water or vapour is passed for brewing a beverage that is delivered for payment through a nozzle into a plastic material cup.

The known apparatuses of this type have some drawbacks and shortcomings, such as the need to a connection to the tap water supply which connection besides increasing the installation costs, supplies water of a quality that strongly depends upon the location, has a high hardness and sometime is chlorinated for sanitary reasons.

This is detrimental to the quality of the delivered beverages, particularly an espresso coffee, even when brewed with high quality ground coffee. Although a few of the negative properties of the water delivered through the water mains can be corrected by suitably adjusting the coffee brewing machine (or even other kind of hot beverages), their unpredictable variability generally prevents any intervention on a case basis so that the taste of the delivered beverage is poor.

Moreover, the water supplied by the water mains is not eligible for being offered as a refreshing drink, possibly cooled in summertime. To this end there are normally used so called "bowl" dispensers that are equipped with a replaceable container of a good quality water, typically water low in mineral content, that is directly delivered from the container mounted upside-down on a support frame through a spout. More expensive and sophisticated dispensers provide for refrigerating the water. These are however additional apparatuses that are fully exploited only in summer, and that increases the drawbacks in respect of space, cost and servicing at the premises in which they are installed.

It is an object of the present invention to overcome the drawbacks of the known dispensers, particularly by providing a combined dispenser adapted to deliver high quality espresso coffee (and possibly heated beverages), as well as drinking water also of good quality, both cooled and at room temperature, through a single apparatus that does not need to be connected to the water mains. In accordance with the invention, these objects are accomplished through a combined apparatus for delivering heated beverages and drinking water as claimed in claims 1 and 2. Additional advantageous features are recited by the dependent claims.

According to a first aspect the invention provides for a combination in the same apparatus of a machine for brewing espresso coffee and a device for delivering water from a reservoir of the "bowl" type. In accordance with a second aspect, the invention consists of a combined dispensing apparatus for delivering both heated beverages and drinking water.

The invention will now be disclosed with reference to a preferred but not limiting embodiment thereof, illustrated in the attached drawings in which:
Fig. 1 is a perspective view of an apparatus according to the present invention;
Fig. 2 is a perspective scrap view of the rear portion of the apparatus shown in Fig. 1.

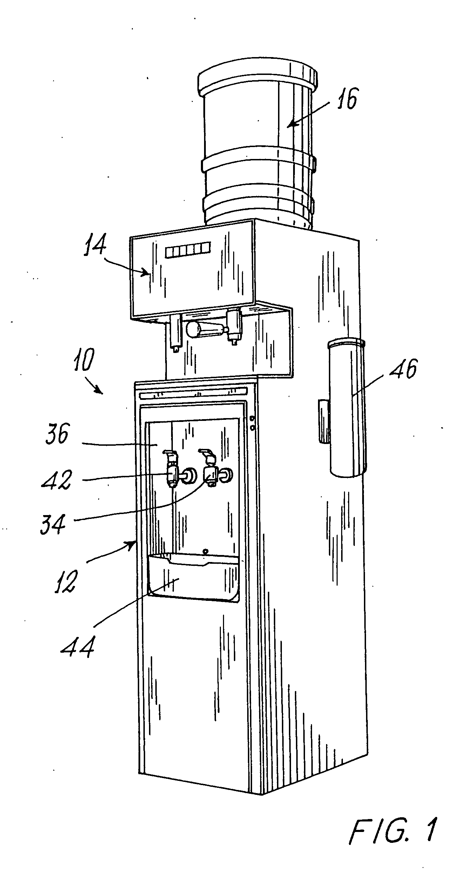

Firstly referring to Fig. 1, an apparatus 10 according to the invention comprises a generally parallelepiped metal frame 12 on which there is mounted a removable reservoir 16 containing water, and provided with a lateral container 46 of paper or plastics cups, sugar and sticks. According to an embodiment not shown in the drawings, the cup container can be positioned inside the apparatus, e.g. in a drawer to be extracted. Within the upper portion of the frame 12 there is fitted a machine 14 for brewing espresso coffee and/or other warm (or hot) beverages, directly operable by the user, whereas a cavity 36 is formed in the intermediate portion of the housing with two spouts for supplying water. Although not shown in Fig. 1, the apparatus is (or can be) generally provided with a collecting device operating with coins, tokens or more preferably cards, with different rates for the different types of beverages, and in case at no cost or at low cost for supplying drinking water.

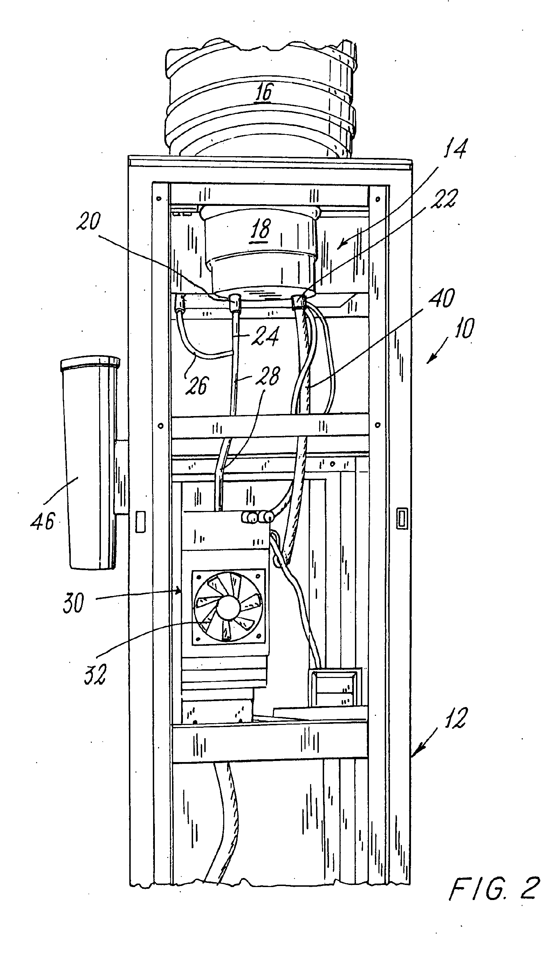

Referring now to both Figures, the removable reservoir 16 containing water, located at the top of the metal frame 12 is preferably provided with a spout and when the reservoir is fitted onto the apparatus, this spout is received within a receiving device 18 (shown in Fig. 2) adapted to engage the spout and to prevent the removal of the water container. Preferably the reservoir 16 is a container of a non-toxic plastic material, can be either transparent or not, either disposable or to be returned, and is delivered sealed in order to keep the water sterilised. Preferably the protection seal is to be removed before fitting the container in the apparatus. The reservoir 16 can be mounted either outside the housing 12, as illustrated by the Figures, or inside the housing for safety reasons, or even inside a top portion of the housing closed by a hatch so that it can be replaced without opening the housing. According to an alternate embodiment not shown in the drawings, the container 16 is located inside the housing, in the lower portion thereof, and water is drawn through a pump. Besides ensuring the sealing of the reservoir, the receiving device 18 comprises two outlets 20, 22 which convey the water to the various apparatus portions through flexible conduits or hoses 24 and 40.

More precisely, the conduit 24 provides for a branching section 26 feeding the coffee machine 14 in the front portion of the housing, while the remaining conduit section 28 conveys water to a refrigeration chamber generally indicated by reference 30 and provided with a fan 32 for delivering cooled water through a spout 34 located in the cavity 36 of the apparatus front portion. Alternatively, a conventional refrigerating assembly equipped with a compressor can be used.

The conduit 40 feeds the water directly to a spout 42 also located in the cavity 36 from which water at room temperature can be drawn. Below the cavity 36 there is located a tray 44 for collccting the water overflowing the cup and conveying it to a waste collecting can inside the housing. Such can also receives the liquid dripping onto the base of the machine 14 supporting the cups during the beverage delivering.

Preferably, the machine 14 operates by using filters comprising a filter paper bag including one or two doses of ground coffee. The machine comprises suitable electrical means for heating water, not illustrated since they are of a conventional design, and is generally adapted to use even bags containing ground barley and/or other substances for brewing corresponding beverages, and in case ground coffee and milk powder to dispense a cappuccino. Alternatively, the machine can operate with coffee beans that are ground when required. A machine of this type often includes a spout for delivering hot water (as shown in Fig. 1) by which the user can obtain other beverages using commercially available filters or bags, such as camomile tea, infusions, chocolate, cappuccino or milk. The apparatus is connected to the power mains in a conventional and not illustrated manner.

Although the invention has been illustrated with reference to preferred embodiments thereof, it generally comprises other embodiments and modifications falling within its scope as will be evident to the skilled of the art.

## Claims

1. An apparatus for dispensing espresso coffee, comprising a coffee brewing machine (14) directly, operable by the user, **characterised in that** it comprises a "bowl" water container (16) for feeding water with predetermined properties to said espresso brewing machine (14).

2. A combined dispensing apparatus (10) for delivering heated beverages and drinking water, comprising a housing (12) containing:
a machine (14) adapted to brew heated beverages by using filters;
means (40) for dispensing water at room temperature;
means (34) dispensing cooled water after passing through a refrigeration chamber (30);
a removable reservoir (16) containing water positioned on the top of said housing (12) and connected through a receiving device (18) for supplying water to said machine (14) for brewing heated beverages and to said means (40, 34) for delivering drinking water at room temperature and cooled drinking water, respectively.

3. An apparatus as claimed in claim 1 or 2, **characterised in that** said removable reservoir (16) is provided with a spout that is fitted into said receiving device (18) on the apparatus .

4. An apparatus as claimed by claim 3, **characterised in that** said removable reservoir (16) is of a plastic material and provided with a protection seal that is removed before fitting said reservoir to said receiving device (18).

5. An apparatus as claimed in claims 1 to 4, **characterised in that** said machine (14) for brewing heated beverages is a machine for brewing espresso coffee.

6. An apparatus as claimed in the preceding claims, **characterised in that** said housing has a cavity (36) in which two spouts (40, 34) are located for delivering drinking water at room temperature and cooled water, respectively, and a tray (44) for collecting water.

7. An apparatus as claimed in the preceding claims, **characterised in that** said housing (12) has a side container (46) outside the housing for paper or plastic material cups.
